# EUROPÄISCHE PATENTANMELDUNG

(11) **EP 0 832 856 A2**
(43) Veröffentlichungstag der Anmeldung: **01.04.1998**
(21) Anmeldenummer: 97113820.1
(22) Anmeldetag: 11.08.1997
(51) Int. Cl.: C02F 11/12

(54) **Verfahren zum indirekt beheizten Trocknen von Gut, insbesondere von Schlämmen**

(30) Priorität: 26.09.1996 AT 1707/96
(71) Anmelder: Andritz-Patentverwaltungs-Gesellschaft m.b.H., 8045 Graz (AT)
(72) Erfinder: Krebs, Georg, 79761 Waldshut-Tiengen (DE); Brunnmair, Erwin, 8045 Graz (AT); Commerford, Peter, Arlington, TX 76001 (US)
(74) Vertreter: Schweinzer, Friedrich

(57) **Zusammenfassung**

Verfahren zum indirekt beheizten Trocknen von Gut, insbesondere von Schlämmen, mit thermischer Dekontaminierung der Abluft. Um eine Verbesserung der thermischen Abluftreinigung sowohl im Normalbetrieb als auch bei geringerer Beheizung zu erzielen, wird Überschußluft aus dem Trocknerkreislauf getrennt von zur Verbrennung bestimmter Primärluft als Sekundärluft in den Brennerkessel 7 geleitet, für eine vorbestimmte Zeit dort belassen, anschließend mit den Rauchgasen vermischt und diese Mischung gemeinsam aus dem Brennerkessel 7 abgezogen.

## Beschreibung

Die Erfindung betrifft ein Verfahren zum indirekt beheizten Trocknen von Gut, insbesondere von Schlämmen, mit thermischer Dekontaminierung der Abluft.

Indirekt mit Wärmeträger-Öl, Dampf, Luft/Luft-Wärmetauschern od. dgl. beheizte Trockner, beispielsweise Schlammtrockner, haben einen geschlossenen Umluftkreislauf, wobei der entweichende Wasserdampf in einem Kondensator, beispielsweise mittels direkter Wassereinspritzung oder eine Kühlschlange, niedergeschlagen wird. Ein Abzug von Abluft aus dem Trocknerkreislauf ist nur zum Abtransport von Leckluft die an den Dichtungen oder sonstigen Leckstellen in das System kommt bzw. inerten Gasen, die bei der Trocknung entstehen oder in das System eingespeist werden, erforderlich. Diese Abluft ist jedoch speziell bei der Trocknung von Klärschlamm schadstoff- und/oder geruchsbelastet und wird üblicherweise durch Verwendung als Verbrennungsluft im Heizkessel der Trocknungsanlage thermisch gereinigt. Der Nachteil dieser Methode besteht darin, daß die Verweilzeit der Aspirationsluft im heißen Bereich der Flamme äußerst kurz ist und wesentlich weniger als die zur Reinigung erforderlichen ca. 2 Sekunden beträgt. Dadurch ist eine Dekontaminierung nur zu einem geringen Teil möglich. In Zeiten, in denen kein oder nur wenig Material zu trocknen ist, findet eine geringere Beheizung des Kessels mit einer geringen Flammtemperatur statt, wodurch in diesen Betriebsfällen eine nur geringfügige Dekontaminierung der Abluft möglich ist. Gleichartige Betriebsfälle treten auch beim Anfahren und Abstellen der Anlage auf, bei Ein- oder Zweischichtbetrieb also sogar mehrmals täglich.

Das Ziel der Erfindung ist eine Verbesserung der thermischen Abluftreinigung von indirekt beheizten Trocknungsanlagen sowohl im Normalbetrieb als auch bei geringerer Beheizung, d. h. Anfahr- und Abstellvorgängen und unterbrochener oder reduzierter Trocknungsleistung.

Dieses Ziel wird erfindungsgemäß dadurch erreicht, daß Überschußluft aus dem Trocknerkreislauf getrennt von zur Verbrennung bestimmter Primärluft als Sekundärluft in den Brennerkessel geleitet, für eine vorbestimmte Zeit dort belassen, anschließend dort mit den Rauchgasen vermischt und diese Mischung gemeinsam aus dem Brennerkessel abgezogen wird. Damit wird eine ausreichende Verweilzeit und Temperatur der Abluft aus dem Trocknerkreislauf bei allen Betriebszuständen und folglich eine optimale Abluftreinigung mit Möglichkeit der Einhaltung der bestehenden Abgasvorschriften sichergestellt. Da zusätzliche Abgasreinigungsstufen nicht mehr nötig sind, kann die Anlage apparativ weniger aufwendig und mit geringeren Investitions- und Betriebskosten errichtet und betrieben werden. Die Vermischung der Überschußluft mit den Rauchgasen weist insbesondere bei Schlammtrocknungsanlagen den weiteren Vorteil auf, daß die beispielsweise vom Schlamm herrührenden Ammoniakanteile mit den NOₓ - Anteilen der Verbrennungsgase eine Verbindung eingehen, sodaß beide Anteile reduziert werden.

Gemäß einem weiteren Merkmal der Erfindung wird die Überschußluft im Brennerkessel vor der Vermischung mit den Rauchgasen mehrmals umgelenkt. Damit kann bei Bedarf die Verweilzeit der zu reinigenden Überschußluft im Brennerkessel verlängert werden, sodaß die Überschußluft die zur thermischen Dekontaminierung notwendige Zeitspanne in einem Bereich mit ausreichend hohen Temperaturen, vorzugsweise mindestens 850°C, verbleibt.

Vorteilhafterweise ist vorgesehen, daß die Überschußluft mindestens 2 Sekunden im Brennerkessel gehalten wird. Nach dieser Mindestzeitspanne ist die gewünschte thermische Reinigung der Trocknerluft gegeben.

Um nach der thermischen Dekontaminierung die NOₓ - Bildung zu verhindern, wird dem Rauchgas/Überschußluft-Gemisch nach dem Brennerkessel ein Teilstrom aus dem Primärgaskreislauf der Wärmetauscherbeheizung zugemischt. Dadurch kann - nachdem die Rauchgas/Abluft-Mischung nach dem Verlassen des Brennerkessels bereits etwas abgekühlt ist - eine weitere rasche Reduktion der Gastemperatur erzielt werden, welche die Stickoxidbildung sicher unterbindet.

Vorzugsweise wird das Mischungsverhältnis derart eingeregelt, daß die Temperatur des Rauchgas/Überschußluft-Gemisches nach dem Verlassen des Brennerkessels rasch reduziert wird, vorzugsweise auf einen Endwert zwischen 400 bis 450°C.

Um bei Betriebszuständen, in denen keine bzw. nur eine minimale Trocknung mit geringer Beheizung erfolgt, auch eine ausreichende Flammentemperatur für die thermische Reinigung der Trocknerabluft zu erzielen, wird gemäß einem weiteren Merkmal der Erfindung bei bestimmten Betriebszuständen der Anlage Wasser in den Brennerkessel eingedüst. Das nach der Eindüsung in die Brennerkammer verdampfende Wasser entzieht Energie, sodaß der Brenner auf einer größeren Laststufe, d. h. bei höherer Flammentemperatur, und für die Reinigung geeigneter Temperatur verbleibt. Da diese Betriebszustände ohnehin seltener und dann nur kurzfristig auftreten, wirkt sich dieser geringfügig erhöhte Energiebedarf nicht besonders nachteilig aus.

Vorzugsweise wird die Überschußluft im Brennerkessel auf mindestens 850°C aufgeheizt. Diese Temperatur gewährleistet eine sichere thermische Dekontaminierung der Trocknerkreislauf-Überschußluft.

In der nachfolgenden Beschreibung soll die Erfindung anhand eines bevorzugten Ausführungsbeispiels unter Bezugnahme auf die beigefügten Zeichnungen näher erläutert werden.

Dabei zeigt die Fig. 1 schematisch eine Anlage zur indirekt beheizten Schlammtrocknung nach dem Stand der Technik, Fig. 2 ist ein Fließschema für eine erfindungsgemäße Trockneranlage nach einer ersten Ausführungsform, Fig. 3 stellt eine mögliche Ausführungsform der Brennerkammer einer erfindungsgemäßen Anlage dar, Fig. 4 zeigt eine anders ausgeführte Brennerkammer für eine erfindungsgemäße Anlage, Fig. 5 zeigt ein Fließschema einer erfindungsgemäßen Anlage, beheizt mit Wärmeträgeröl, Dampf oder Heißwasser und die Fig. 6 und 7 stellen weitere Ausführungsformen einer Trockneranlage dar.

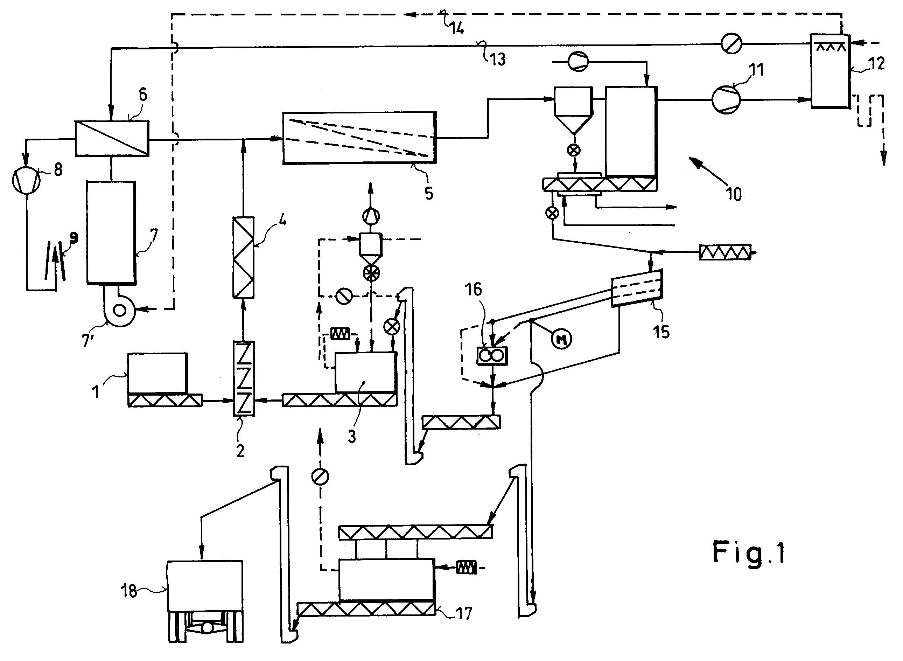

Der zu trocknende Klärschlamm gelangt in der herkömmlichen Anlage der Fig. 1 aus dem die Zuführung puffernden Naßgutsilo 1 in einen Mischer 2, wo zur Einstellung des gewünschten Feuchtigkeitsgehaltes und zur Vermeidung des Verklebens trockenes Trägermaterial, vorzugsweise bereits getrockneter Schlamm, aus einem Lagersilo 3 beigemengt wird. Über eine Förderschnecke 4 wird dieses Gemisch in die Trocknertrommel 5 gefördert, wo es durch heiße Luft getrocknet wird. Diese Luft wird in einem Wärmetauscher 6 erhitzt, dessen Primärseite die Rauchgase eines beispielsweise öl- oder gasbefeuerten Brenners 7' mit Brennerkessel 7 zugeführt werden, die dann über den Förderventilator 8 und einen Kamin 9 ins Freie geleitet werden. Der getrocknete Schlamm wird aus der Trocknertrommel 5 über eine Filteranlage 10 geführt, aus der die Trocknerluft durch den Förderventilator 11 in einen Kondensator 12 abgezogen wird. Im Kondensator 12 wird durch Einspritzung von Kühlwasser der in der Trocknerluft befindliche Wassergehalt kondensiert und dabei auch die Luft gekühlt. Die Trocknerluft wird über eine Leitung 13 wieder der Sekundärseite des Wärmetauschers 6 rückgeführt, erwärmt und in die Trocknertrommel 5 geleitet. Die Überschußluft aus dem Kondensator 12, bei guten Anlagen ca. 200 - 300 m³/h pro Tonne Wasserverdampfung, wird über eine weitere Leitung 14 dem Brenner 7' als Verbrennungsluft zugeführt, wobei aber aufgrund der geringen Verweilzeit im heißen Bereich nur eine geringe Dekontamination bezüglich der Geruchs- und Schadstoffe stattfindet, und diese Geruchs- und Schadstoffe nach Austritt aus dem Abgaskamin 9 die Umwelt belasten bzw. eine Geruchsbelästigung darstellen.

Die festen, getrockneten Bestandteile werden nach der Trocknertrommel 5 in der Filteranlage 10 von der Luft getrennt und über ein Sieb 15 geleitet, wobei die groben Anteile im Brecher 16 zerkleinert und gemeinsam mit den kleinen Anteilen in den Lagersilo 3 gebracht werden. Die mittleren Granulatanteile gelangen in den Granulatsilo 17 und werden verpackt, auf Transportfahrzeuge 18 verladen oder anders deponiert bzw. verarbeitet.

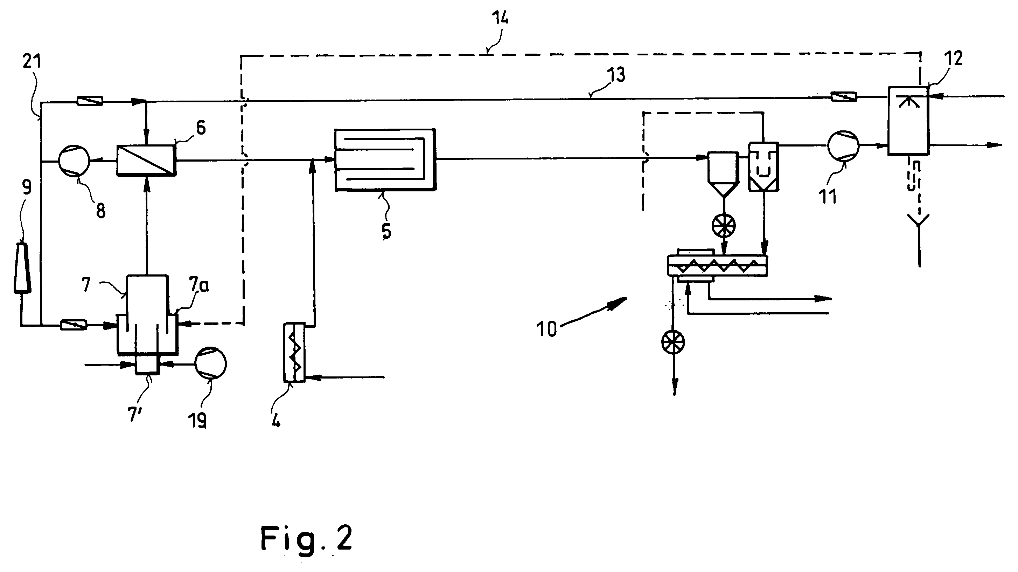

In Fig. 2 ist von einer Anlage zur Durchführung des erfindungsgemäßen Verfahrens nur der Trocknerkreislauf und der Primärkreislauf des Wärmetauschers 6 dargestellt, wobei gleiche Anlagenteile mit den gleichen Bezugszeichen versehen sind.

Die geruchs- und schadstoffbelastete Überschußluft aus dem Trocknerkreislauf wird aus einem Bereich mit Überdruck, vorteilhafterweise dem Kondensator 12, über die Leitung 14 dem Brennerkessel 7 zugeführt. Jedoch wird sie dort nicht als Verbrennungsluft für den Brenner 7' verwendet, sondern in einen auf eine längere Verweilzeit ausgelegten Bereich 7a des Brennerkessels 7 mit hoher Temperatur geleitet. Für die meisten Schad- und Geruchstoffe ist bei einer Verweilzeit von ca. 2 Sekunden bei einer Temperatur von ca. 850°C eine ausreichende thermische Dekontamination gegeben. Je nach Bedarf und zu entsorgenden Stoffen kann die Verweilzeit durch die konstruktive Gestaltung des Bereiches 7a gesteuert und auch die Flammentemperatur bzw. die Temperatur im Bereich 7a verändert werden. In die Primärseite des Wärmetauschers 6 wird dann ein Gemisch aus Rauchgasen und der Überschußluft aus dem Trocknerkreislauf gefördert.

Die Verbrennungsluft wird über einen Förderventilator 19 aus der Umgebung zugeführt.

Hinter dem Förderventilator 8 zweigt von der Leitung zum Abgaskamin 9 eine regelbare Leitung 20 ab, die bereits gekühlte Rauchgase nach Passage der Primärseite des Wärmetauschers 6 als Sekundärluft zurück in den Bereich 7a führt, wodurch eine Temperaturregelung in diesem Bereich 7a möglich ist. Durch diese Rückmischung werden auch vorteilhafterweise die Abgasemissionen vermindert. Weiters zweigt eine zweite regelbare Leitung 21 zur Sekundärseite des Wärmetauschers 6 vor der Trocknertrommel 5 ab, sodaß hierdurch falls erforderlich eine Inertisierung zur Vermeidung von Explosionsgefahr möglich ist.

Die rasche Abkühlung des Gemisches aus Rauchgasen und thermisch dekontaminierter Überschußluft ist nicht nur zum Erzielen der erwünschten niedrigen Abgastemperatur von unter 200°C zur Vermeidung der NOₓ - Bildung vorteilhaft. Die Rauchgas-Überschußluft-Vermischung ist auch deswegen von Vorteil, weil damit in der Überschußluft befindliche, vom Klärschlamm herrührende Ammoniakteilchen, mit freiem NOₓ eine Verbindung eingehen und beide Komponenten reduziert werden.

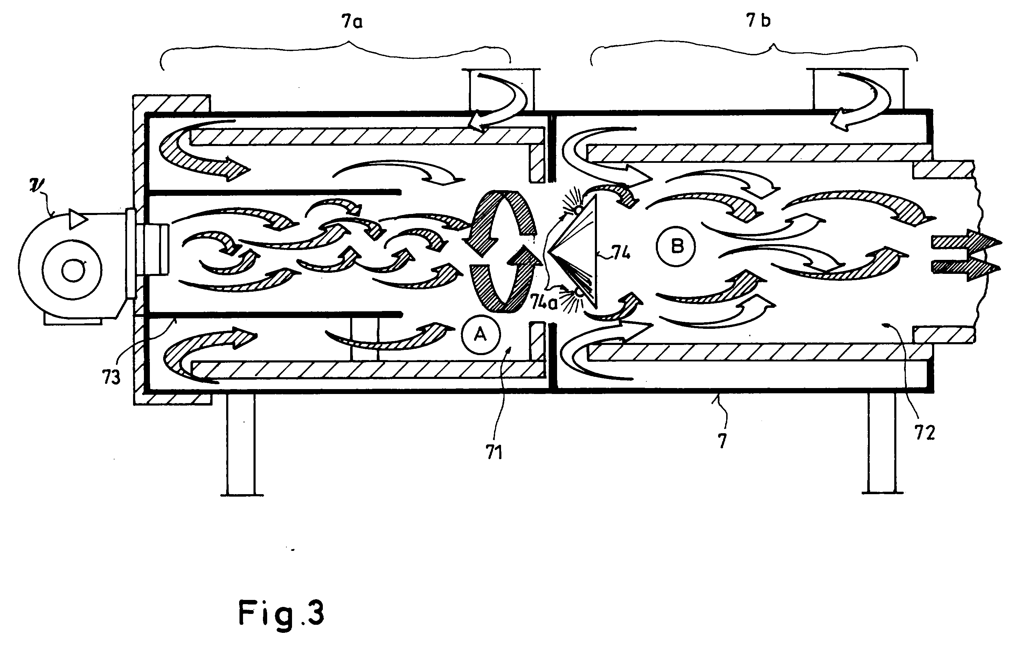

In Fig. 3 ist eine vorteilhafte Ausführungsform für einen Brennerkessel 7 zur Verwendung in der erfindungsgemäßen Anlage dargestellt. Es handelt sich dabei um einen Heißgaserzeuger mit Nachverbrennung und er besteht aus zwei in Serie geschalteten Kammern 71, 72. Der öl- oder gasbeheizte Brenner 7' mündet in das Flammrohr 73 in der ersten Kammer 71. In diese Kammer 71 wird in den Bereich 7a die Überschußluft aus dem Trocknerkreislauf zugeführt, die am Ende der Flamme bzw. des Flammrohres 73 mit den ausgebrannten Rauchgasen zusammentrifft und mit diesen verwirbelt bzw. vermischt wird. Die Kammer 71 bzw. der Bereich 7a ist so dimensioniert, daß das Gemisch aus Überschußluft und Rauchgasen zumindest ca. 2 Sekunden bei zumindest ca. 850°C gehalten wird.

Anschließend gelangt das heiße Gemisch in die zweite Kammer 72, welche ebenso wie die Kammer 71 mit Unterdruck gefahren wird. Vorteilhafterweise können gekühlte Primärgase aus dem Wärmetauscher 6, in der Regel mit Temperaturen unter 200°C, in die Kammer 72 zugeführt werden, vorzugsweise in einen analog dem Bereich 7a gestalteten Bereich 7b. Durch diese Mischung des gereinigten Rauchgas/Überschußluft-Gemisches mit den Gasen des Primärkreislaufes, welche durch die Ablenkung mittels des Kegels 74 oder einer anderen Schikane begünstigt wird, entsteht nun die Warmluft, die unmittelbar in den Wärmetauscher 6 geleitet wird und dort die Trocknerumluft aufheizt. Die Wärmezufuhr des Brenners 7', die Primärgaszumischung und damit die Austrittstemperatur aus dem Brennerkessel 7 wird vorzugsweise über die Austrittstemperatur der Trocknungstrommel 5 gesteuert, wo herkömmlicherweise ca. 90°C als Standardwert angestrebt werden. Bei Absinken dieser Temperatur durch beispielsweise erhöhte Aufgabe von feuchtem Klärschlamm und somit von zu verdampfendem Wasser am Trommeleingang wird die Brennerleistung erhöht und die Temperatur in der Kammer 71 steigt auf über 850°C, wodurch auch die Austrittstemperatur aus der Kammer 72 ebenfalls steigt. Sobald die Temperatur wegen geringerer benötigter Trocknerkapazität aber auf eine Temperatur von unter 850°C geregelt werden sollte, wird vorteilhafterweise über Sprühwasserdüsen 74a Wasser eingespritzt, wobei durch diesen Energieentzug die Leistung des Brenner 7' wieder angehoben werden kann, sodaß selbst beim Anfahren, Abstellen oder bei geringen Trocknungsmengen die Temperatur hoch genug bleibt um die Nachverbrennung und die thermische Dekontaminierung zu gewährleisten. Vorteilhafterweise sind die Sprühwasserdüsen 74a mit Hochdruck-Feinstzerstäubern ausgestattet, damit am Übergang der Kammern 71, 72 tatsächlich eine Verdampfung stattfindet.

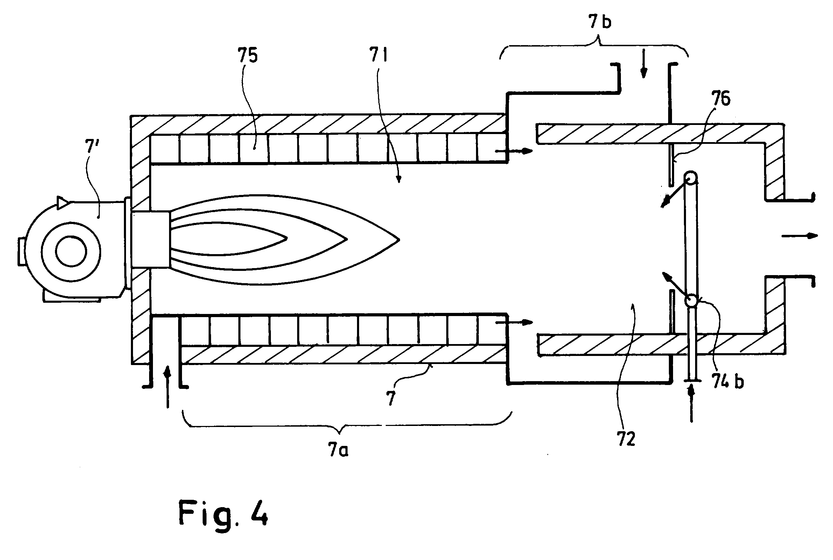

Eine etwas andere Ausführung des Brennerkessels 7 ist in Fig. 4 dargestellt. Der Bereich 7a ist hier zur Erzielung der längeren Verweilzeit der Überschußluft von mindestens 2 Sekunden bei ca. 850°C im heißen Bereich mit einem Spiralwärmetauscher 75 ausgestattet. Anschließend erfolgt wieder die Mischung mit über den Bereich 7b rückgeführtem Primärgas, wobei vorteilhafterweise eine allfällige Blende 76 für gleichmäßige Durchmischung sorgt. Die Wassereindüsung erfolgt hier über eine außerhalb des heißen Gas/Luft-Stromes angeordnete Ringdüse 74b.

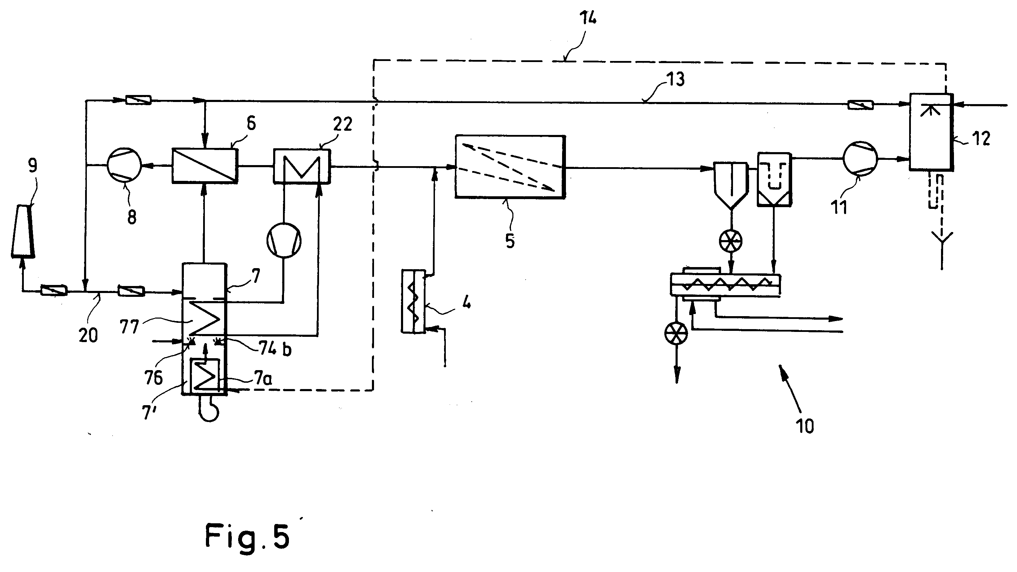

Eine weitere Ausführungsform einer Anlage für das erfindungsgemäße Verfahren stellt Fig. 5 dar, wobei hier die Beheizung der Trocknerluft mit Wärmeträgeröl, Dampf oder Heißwasser erfolgt. Über die Leitung 14 wird die Überschußluft aus dem Kondensator 12 oder einem anderen Überdruckbereich dem Bereich 7a des Brennerkessels 7 zugeleitet. Hinter eine Blende 76 zur besseren Durchmischung und der Ringdüse 74b zur Wassereindüsung befindet sich ein Bereich 77 mit Heizflächen, welche einen dem Wärmetauscher 6 zur Vorwärmung nachgeschalteten zweiten Wärmetauscher 22 zur Aufwärmung des Umluftstromes mit Wärmeträgeröl speisen.

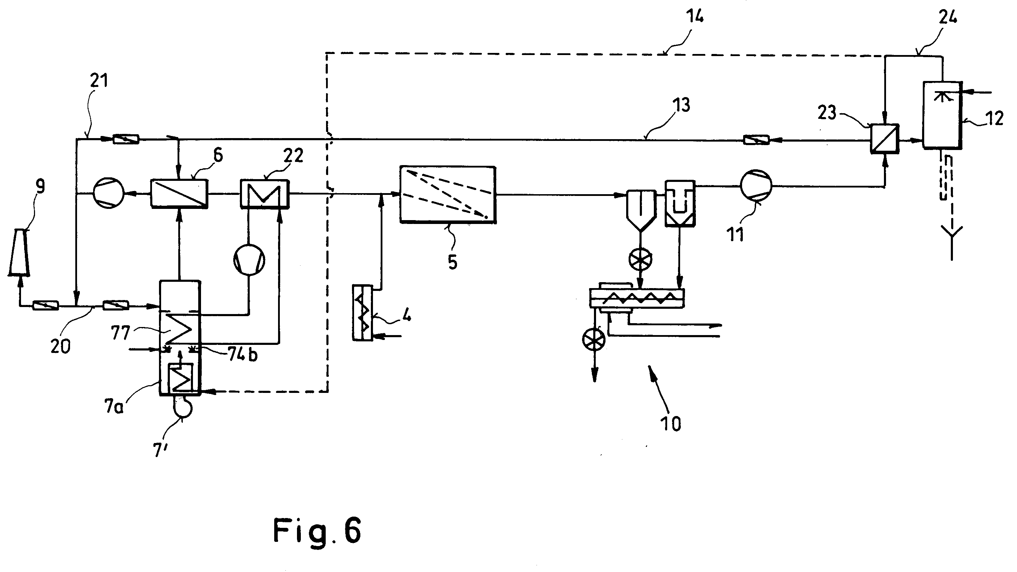

Bei der Ausführungsform der Anlage Fig. 6 ist das erfindungsgemäße Verfahren derart gestaltet, daß die Trocknerluft hinter der Filteranlage 10 durch den Förderventilator 11 in einen Wärmetauscher 23 geführt wird, wo sie einen Teil ihrer Wärme an aus dem Kondensator 12 abgezogene, trockene Luft zu deren Vorwärmung abgibt. Die zu reinigende Überschußluft wird aus dem Leitungsstück 24 zwischen Kondensator 12 und Wärmetauscher 23 abgezweigt. Dadurch ergibt sich eine vorteilhafte Energieeinsparung.

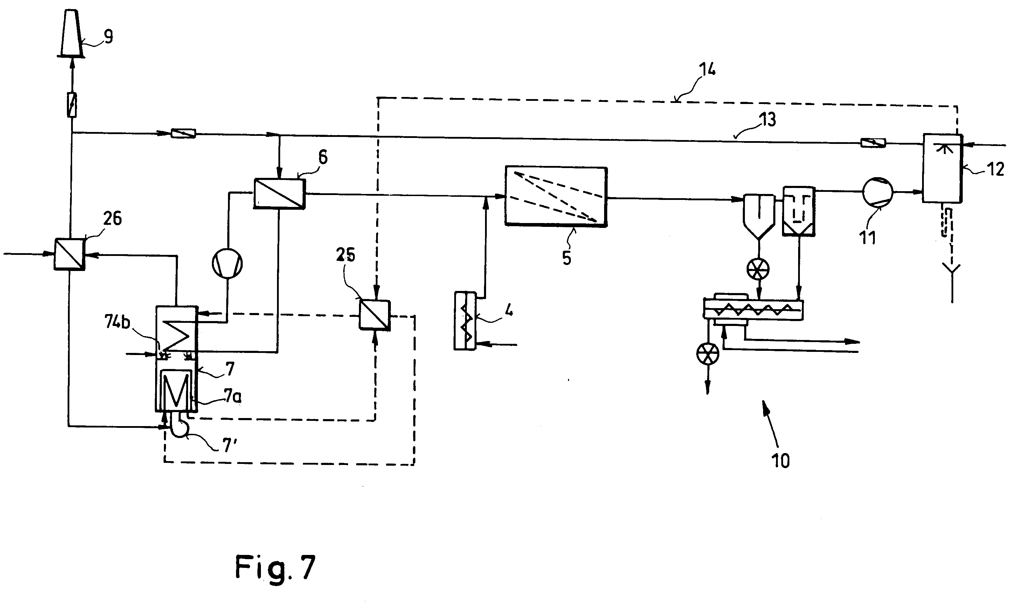

Eine ebenfalls sehr energiesparende Verfahrensvariante läßt sich mit der Anlage der Fig. 7 verwirklichen. Die Überschußluft aus dem Trocknerkreislauf wird einem Wärmetauscher 25 zugeleitet, in welchem sie bereits vor der im Bereich 7a des Brennerkessels 7 stattfindenden thermischen Dekontaminierung aufgeheizt wird, wodurch weniger Energie und eine kürzere Verweilzeit - kleinerer Brennerkessel, geringerer Platzbedarf - notwendig sind. Die im Bereich 7a gereinigte Umluft wird zur Vorwärmung der Überschußluft im Wärmetauscher 25 eingesetzt und danach im Endabschnitt des Brennerkessels 7 den Rauchgasen beigemischt. Dieses aus dem Brennerkessel 7 austretende Rauchgas/Überschußluft-Gemisch wird ebenfalls einem Wärmetausch unterzogen und heizt in einem weiteren Wärmetauscher 26 die Verbrennungsluft für den Brenner 7' auf.

## Patentansprüche

1. Verfahren zum indirekt beheizten Trocknen von Gut, insbesondere von Schlämmen, mit thermischer Dekontaminierung der Abluft aus dem Trocknerkreislauf, dadurch gekennzeichnet, daß Überschußluft aus dem Trocknerkreislauf getrennt von zur Verbrennung bestimmter Primärluft als Sekundärluft in den Brennerkessel (7) geleitet, für eine vorbestimmte Zeit dort belassen, anschließend dort mit den Rauchgasen vermischt und diese Mischung gemeinsam aus dem Brennerkessel (7) abgezogen wird.

2. Verfahren nach Anspruch 1, dadurch gekennzeichnet, daß die Überschußluft im Brennerkessel (7) vor der Vermischung mit den Rauchgasen mehrmals umgelenkt wird.

3. Verfahren nach Anspruch 1 oder 2, dadurch gekennzeichnet, daß die Überschußluft mindestens 2 Sekunden im Brennerkessel (7) gehalten wird.

4. Verfahren nach einem der vorhergehenden Ansprüche, dadurch gekennzeichnet, daß dem Rauchgas/Überschußluft-Gemisch nach dem Brennerkessel (7) ein Teilstrom aus dem Primärgaskreislauf des Wärmetauschers (6) zugemischt wird.

5. Verfahren nach einem der vorhergehenden Ansprüche, dadurch gekennzeichnet, daß die Temperatur des Rauchgas/Überschußluft-Gemisches nach dem Verlassen des Brennerkessels (7) rasch reduziert wird, vorzugsweise auf einen Endwert unter 400 bis 450°C.

6. Verfahren nach einem der vorhergehenden Ansprüche, dadurch gekennzeichnet, daß bei bestimmten Betriebszuständen der Anlage Wasser in den Brennerkessel (7) eingedüst wird.

7. Verfahren nach einem der vorhergehenden Ansprüche, dadurch gekennzeichnet, daß die Überschußluft im Brennerkessel (7) auf mindestens 850°C aufgeheizt wird.
